# FASCICULE DE BREVET EUROPEEN

(11) **EP 1 356 569 B1**
(45) Date de publication et mention de la délivrance du brevet: **12.05.2004**
(21) Numéro de dépôt: 01980610.8
(22) Date de dépôt: 19.10.2001
(51) Int. Cl.: H02J 9/06, H02J 1/10

(54) **DISPOSITIF D'ALIMENTATION ELECTRIQUE A HAUT NIVEAU DE SECURITE**
ELEKRISCHE SPEISUNGSVORRICHTUNG MIT HOHEM SICHERHEITSGRAD
HIGH-SECURITY ELECTRIC POWER SUPPLY DEVICE

(30) Priorité: 24.10.2000 FR 0013636
(43) Date de publication de la demande: 29.10.2003
(73) Titulaire: Thales, 75008 Paris (FR)
(72) Inventeur: BEDOUET, Bernard Thales Intellectual Property, F-94117 Arcueil Cedex (FR)
(74) Mandataire: Collet, Alain
(86) Numéro de dépôt international: PCT/FR2001/003253
(87) Numéro de publication internationale: WO 2002/035680

(56) Documents cités:
- PATENT ABSTRACTS OF JAPAN vol. 1997, no. 11, 28 novembre 1997 (1997-11-28) & JP 09 200974 A (ORIGIN ELECTRIC CO LTD;NIPPON TELEGR & TELEPH CORP <NTT>), 31 juillet 1997 (1997-07-31)
- PATENT ABSTRACTS OF JAPAN vol. 1995, no. 03, 28 avril 1995 (1995-04-28) & JP 06 335178 A (CANON INC), 2 décembre 1994 (1994-12-02)

## Description

La présente invention concerne un dispositif d'alimentation en énergie électrique d'une pluralité de modules électroniques et notamment l'alimentation des équipements embarqués à bord des aérodynes.

Les aérodynes comportent de nombreux équipements électroniques alimentés en courant continu par plusieurs réseaux d'alimentation électrique fonctionnant, soit en courant alternatif, soit en courant continu. L'alimentation des équipements électroniques est effectuée à partir de plusieurs réseaux électriques pour des raisons de continuité de fonctionnement en cas de panne d'un des réseaux.

Les tensions fournies par les réseaux des aérodynes sont de niveaux variables et fortement perturbées. Ces variations de tension, dues entre autres aux commutations électriques intempestives des équipements sur les réseaux d'alimentation, sont préjudiciables pour les équipements. Par exemple, un réseau de bord d'aéronefs fonctionnant en courant continu, de tension nominale 28 volts, peut présenter des variations transitoires de tension de 12 à 60 volts ; un réseau de bord fonctionnant en courant alternatif peut présenter des variations d'amplitude du même ordre de grandeur.

Par ailleurs, l'évolution des équipements embarqués à bord des aérodynes tend vers une structure de plus en plus modulaire et de plus en plus intégrée comportant des baies, armoires ou cabinets dans lesquelles sont rassemblés une multitude de modules. Ces modules nécessitent une alimentation propre indépendante de la nature du réseau de bord ( réseau en courant alternatif ou en courant continu)

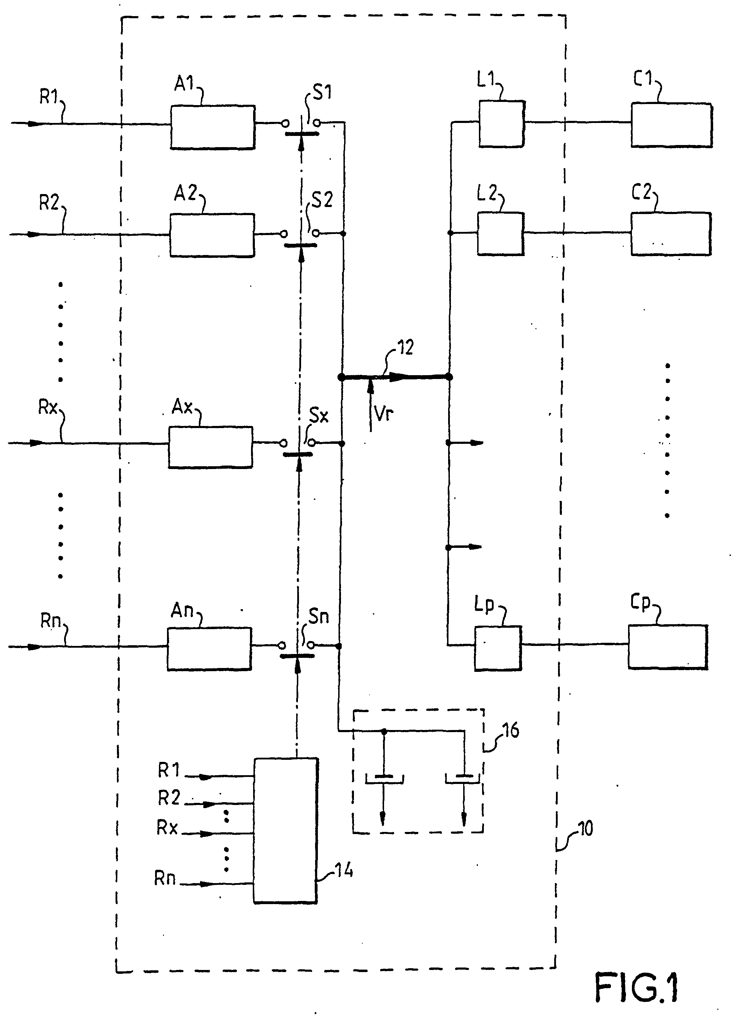

La figure 1 représente un synoptique d'une architecture de type distribuée d'un dispositif d'alimentation 10 en courant continu, selon l'état de l'art, de p équipements C1, C2,....Cp (qu'on appellera, par un terme plus général, consommateurs électriques) d'un aérodyne, à partir de n réseaux électriques R1, R2,....Rn d'alimentation.

Dans l'exemple de la figure 1, le dispositif d'alimentation 10 comporte une ligne commune 12 d'alimentation en courant continu de l'ensemble des consommateurs électriques, chaque consommateur C1, C2,....Cp étant alimenté travers un respectif dispositif de protection L1, L2,....Lp.

La ligne commune 12 du dispositif d'alimentation est connectée à au moins un des réseaux R1, R2,....Rn de bord à travers un contacteur de sélection S1, S2,...Sn du réseau et un bloc d'adaptation A1, A2,...An associés à ce réseau. Les blocs d'adaptation ont comme principale fonction la fourniture, à partir des réseaux de natures et stabilités différentes, d'une tension continue Vr régulée ou semi-régulée d'alimentation des consommateurs.

Un gestionnaire de réseau 14 assure la sélection d'au moins un réseau Rx (x étant un nombre entier compris entre 1 et n) parmi l'ensemble des réseaux R1, R2,....Rn en fonction de priorités respectives P1, P2,... Pn attribuée à chacun des réseaux. Par exemple ces priorités peuvent définir l'ordre d'utilisation de réseau. A cet effet, lors de l'alimentation des consommateurs, le gestionnaire de réseau 14 effectue la fermeture du contacteur associé au réseau sélectionné mettant sous la tension Vr la ligne d'alimentation commune 12 du dispositif d'alimentation 10 des consommateurs.

En cas de panne ou défaut du réseau en service le gestionnaire de réseau 14 effectue l'ouverture du contacteur associé au réseau en panne puis la fermeture du contacteur associé au nouveau réseau choisi de priorité suivante.

Le dispositif d'alimentation 10 comporte en outre une batterie 16 de condensateurs connectés en parallèle sur la ligne commune 12 d'alimentation des consommateurs pour effacer des microcoupures apparaissant sur les réseaux. Ces microcoupures peuvent atteindre des durées de l'ordre de 500 millisecondes. Pour une puissance distribuée de 500 watts, la valeur de cette batterie 16 de condensateurs peut atteindre 0,5 Farads. Une batterie de 0,47 Farads peut être constituée par exemple par une centaine de condensateurs de 4700 microFarads.

Cette architecture du dispositif d'alimentation 10 de l'état de l'art présente plusieurs inconvénients. D'abord, le gestionnaire de réseau 14 est unique et une panne du dit gestionnaire de réseau peut entraîner une ouverture de tous les contacteurs S1, S2...Sn produisant la mise hors tension de l'ensemble des équipements ce qui présente un grave danger dans le cas des aérodynes.

Par ailleurs, un seul des condensateurs de la batterie 16 de condensateurs en parallèle sur la ligne commune 12, peut provoquer la mise hors service du dispositif d'alimentation. Une protection par fusible est nécessaire pour chaque condensateur pour éviter l'arrêt de l'ensemble des consommateurs, ce qui complique la maintenance et augmente le coût du dispositif d'alimentation.

Le document JP 09 200 974 montre un dispositif d'alimentation en énergie électrique où on peut affecter un niveau de priorité à chaque réseau électrique (secteur et batteries) par le préréglage des niveaux des tensions en sortie des adaptateurs connectés aux réseaux. Le dispositif de sélection de réseaux montré par ce document est constitué par un aiguillage à diodes dont les cathodes sont connectés ensemble à un point commun d'alimentation des consommateurs et les anodes sont respectivement connectés aux réseaux électriques à travers ses respectifs adaptateurs.

Ce dispositif de l'art antérieur, tout en étant fiable, comporte le problème de la perte d'énergie dans les diodes traversées par le courant d'alimentation des consommateurs.

A fin de pallier les inconvénients de l'art antérieur, l'invention propose un dispositif d'alimentation en énergie électrique, notamment pour être embarqué dans un aérodyne, alimentant en courant continu des consommateurs électriques C1, C2,...Cp à partir d'au moins un réseau électrique Rx choisi par un circuit sélecteur du dispositif, parmi une pluralité de réseaux électriques R1, R2,... Rn, le dispositif d'alimentation comportant un adaptateur A1, A2,....An par réseau électrique (R1, R2, ... Rn), chacun des adaptateurs fournissant, à partir du réseau électrique auquel l'adaptateur se trouve connecté, une respective tension continue préréglée V1, V2,...Vn d'alimentation des consommateurs électriques, le circuit sélecteur étant un aiguillage à diodes comportant des diodes D1, D2,...Dn dont les cathodes sont connectées ensembles à un point commun d'alimentation des consommateurs et dont les anodes sont respectivement connectées aux réseaux électriques R1, R2,.... Rn à travers ses respectifs adaptateurs A1, A2,...An pour choisir le réseau électrique connecté à l'adaptateur fournissant la tension continue régulée Vₓ la plus élevée, caracterisé en ce que chacune des diodes D1, D2,...Dn de l'aiguillage comporte un interrupteur I1, I2, ...In en parallèle pour court-circuiter sa respective diode lorsqu'elle est traversée par au moins une partie du courant d'alimentation des consommateurs fournie par le réseau électrique choisi Rx alimentant les consommateurs électriques.

Le dispositif de sélection du réseau par un aiguillage à diodes présente l'avantage de comporter peu de composants et donc d'être très fiable.

Selon l'invention, lorsqu'une des diodes de l'aiguillage est traversée par au moins une partie du courant d'alimentation des consommateurs fournie par le réseau choisi, un interrupteur en parallèle sur cette diode est fermé court-circuitant la dite diode. Le court-circuit de la diode, par son interrupteur associé, évite la perte d'énergie dans la diode, due à son seuil de conduction, traversée par le courant d'alimentation des consommateurs. Cela présente l'avantage d'éviter des pertes énergétiques inutiles, un tel gain d'énergie étant très appréciable dans les aéronefs.

Dans le dispositif d'alimentation selon l'invention, on peut affecter aisément un niveau de priorité P1, P2,... Pn à chaque réseau R1, R2,...Rn par le préréglage des niveaux des tensions V1, V2,...Vn en sortie des adaptateurs connectés aux réseaux. Ainsi, dans une réalisation du système d'alimentation selon l'invention avec aiguillage à diodes, lorsque le niveau de tension continue en sortie de l'adaptateur d'un premier réseau est plus élevé que le niveau de tension continue en sortie de l'adaptateur d'un deuxième réseau, le premier réseau aura un niveau de priorité plus élevé que le deuxième réseau, c'est-à-dire que le premier réseau sera sélectionné en priorité par rapport au deuxième réseau.

Dans une variante de la réalisation préférentielle du dispositif d'alimentation, chacun des consommateurs est alimenté à travers un dispositif de protection L1, L2,... Lp contre les surcharges par déconnexion du consommateur de son alimentation, un condensateur de réserve d'énergie Ca1, Ca2,...Cap étant connecté entre la sortie du dispositif de protection et un potentiel de référence dudit dispositif et en ce qu'une diode de mise en parallèle X1, X2,...Xp des condensateurs de réserve d'énergie est connectée entre l'entrée et la sortie du dispositif de protection, l'anode de la diode de mise en parallèle se trouvant connectée du coté alimentation du consommateur.

D'autres caractéristiques et avantages de l'invention apparaîtront à la lecture de la description détaillée qui en est faite en référence aux dessins annexés dans lesquels :
- la figure 1, déjà décrite, représente un synoptique d'une architecture de type distribuée d'un dispositif d'alimentation de l'art antérieur ;
- la figure 2 représente un synoptique d'une architecture de type distribuée d'un dispositif d'alimentation selon l'invention ;
- la figure 3 représente un synoptique d'un dispositif d'alimentation selon l'invention alimenté par trois réseaux ;
- les figures 4 et 5 montrent des schémas blocs avec les probabilités de panne des sous-ensembles de deux dispositifs d'alimentation.

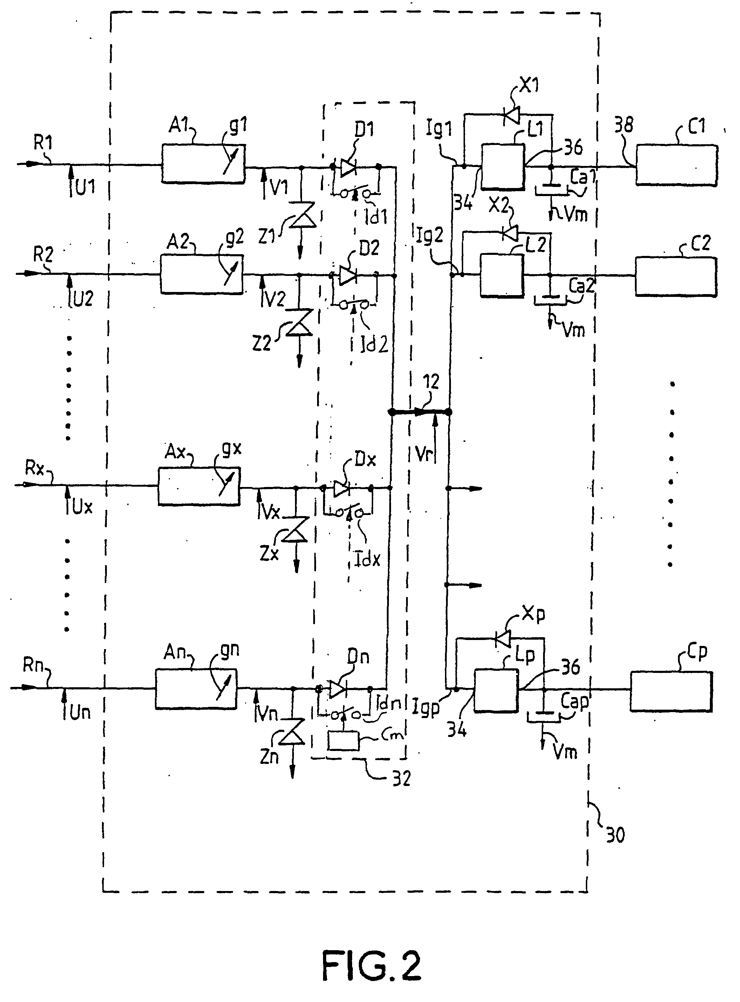

La figure 2 représente un synoptique d'une architecture de type distribuée d'un dispositif d'alimentation 30 selon l'invention. Le dispositif alimente les p consommateurs électriques C1, C2,....Cp d'un aérodyne à partir de n réseaux électriques R1, R2,....Rn de natures différentes, certains réseaux fonctionnant en un courant alternatif et d'autres en courant continu.

Le dispositif d'alimentation 30 comporte la ligne commune 12 d'alimentation en courant continu de l'ensemble des consommateurs électriques C1, C2,....Cp à travers leurs respectifs dispositifs de protection L1, L2,....Lp. Les dispositifs de protection L1, L2,....Lp sont des limiteurs disjoncteurs assurant une protection des consommateurs d'une part, contre des surtensions pouvant apparaître sur la ligne commune d'alimentation 12 et, d'autre part, contre des surintensités, par la disjonction du dispositif de protection.

Les réseaux R1, R2,....Rn de bord et leurs adaptateurs associés A1, A2,...An sont connectés à la ligne commune 12 d'alimentation à travers les diodes D1, D2,...Dn d'un aiguillage à diodes 32 assurant la sélection d'un réseau Rx d'alimentation des consommateurs, parmi les réseaux R1, R2,... Rn de bord, x pouvant prendre une valeur de 1 à n.

Les blocs d'adaptation ont comme principale fonction l'adaptation de la nature et du niveau des tensions des réseaux U1, U2,...Un en fournissant à la ligne commune 12 d'alimentation des consommateurs, une tension continue régulée ou semi-régulée Vr cette tension Vr pouvant prendre une des valeurs V1, V2,... Vn selon le réseau choisi.

Le circuit sélecteur 32 comporte les diodes D1, D2,...Dn dont les cathodes sont connectées ensemble à la ligne commune 12 d'alimentation des consommateurs, l'anode de chacune des diodes étant connectée respectivement aux réseaux R1, R2,....Rn à travers les respectifs adaptateurs A1, A2,...An et des interrupteurs Id1, Id2, ... Idn, chaque interrupteur étant connecté en parallèle avec sa respective diode D1, D2,... Dn pour la court-circuiter lorsqu'elle traversée par un courant. Les interrupteurs sont commandés par un circuit de commande Cm selon un principe décrit par la suite.

Un dispositif écrêteur Z1, Z2,..Zn est connecté respectivement à chacune des sorties en courant continu des adaptateurs A1, A2,...An éliminant toute panne provoquée par des éventuelles surtensions en sortie desdits adaptateurs.

Les adaptateurs A1, A2,.. An comportent chacun un réglage g1, g2.. gn permettant d'ajuster leur niveau de tension continue de sortie à des niveaux prédéfinis. Ces niveaux de tension prédéfinis déterminent les niveaux de priorité P1, P2,... Pn des réseaux électriques.

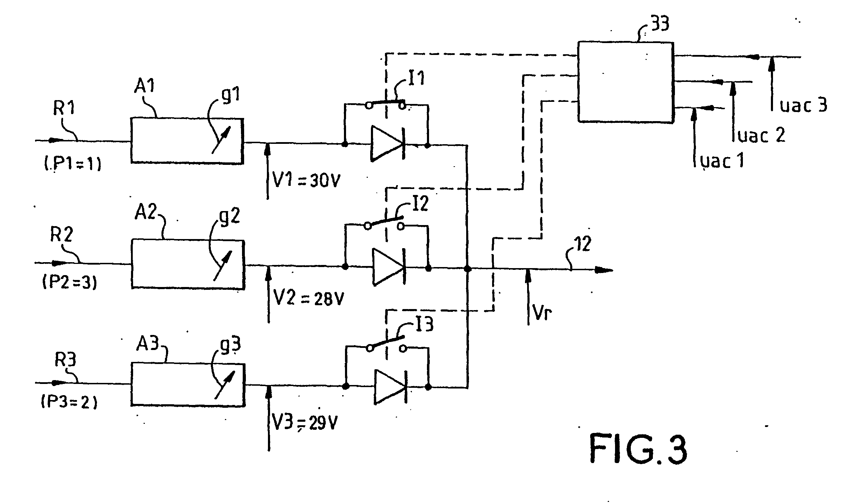

Nous allons par la suite décrire le fonctionnement du dispositif d'alimentation à l'aide de la figure 3 en considérant trois réseaux R1, R2 et R3 connectés au dispositif d'alimentation 30 de la figure 2.

La tension d'alimentation Vr des consommateurs est de l'ordre de 30 volts. Considérons que l'on souhaite affecter les priorités suivantes « 1, 3, 2 » respectivement aux réseaux R1, R2, et R3. Les tensions V1, V2 et V3 en sortie des adaptateurs A1, A2 et A3 seront réglées par les réglages g1, g2 et g3 respectivement à 30 volts, 28 volts et 29 volts. La figure 3 montre les trois diodes D1, D2 et D3 recevant respectivement par leurs anodes les tensions V1= 30 volts, V2= 28 volts et V3= 29 volts des adaptateurs A1, A2 et A3. Les tensions uac1, uac2 et uac3 apparaissant entre les anodes et les cathodes de chacune des diodes, conduisent à ce que seulement la diode D1, ayant une tension anode cathode uac1 supérieure au seuil de conduction de la diode, soit passante, les deux autres diodes étant bloquées. Le premier réseau R1 de priorité « 1 » fournira la tension Vr ( Vr = V1 moins la tension de seuil de la diode) et le courant d'alimentation des consommateurs.

Si le réseau R1 tombe en panne ou est interrompu, la diode D3 recevant par son anode la tension suivante plus élevée (V3= 29 volts) devient passante, les diodes D1 et D2 étant bloquées, le réseau R3 de priorité « 2 » fournira le courant d'alimentation aux consommateurs.

La figure 3 montre un aiguillage à diodes, chacune des diodes D1, D2 et D3 de l'aiguillage comporte un interrupteur I1, I2 et I3 en parallèle. L'interrupteur, en parallèle avec la diode du réseau alimentant la ligne commune 12, est fermé, court-circuitant la diode, lorsqu'elle ladite diode est traversée par au moins une partie du courant d'alimentation des consommateurs fournie par le réseau choisi.

Les interrupteurs 11, I2, I3 peuvent être est commandés par un circuit de contrôle 33 utilisant par exemple la mesure des tensions anode/cathode uac1, uac2 et uac3, de chacune des diodes D1, D2 et D3. Le circuit de contrôle ferme, au moment de la mise sous tension du dispositif d'alimentation, l'interrupteur de la diode traversée par le courant fourni par le réseau prioritaire. Ce principe de commande des interrupteurs I1, I2, I3 peut être utilisé pour commander les interrupteurs Id1, Id2,...Idn par le circuit de commande Cm du dispositif de la figure 2, quel que soit le nombre des réseaux n comportant n interrupteurs 11, I2,... In.

L'interrupteur court-circutant la diode supprime les pertes d'énergie dans la diode traversée par le courant d'alimentation des consommateurs. Ainsi, dans l'exemple de la figure 3, le réseau prioritaire étant le réseau R1, la diode D1 est court-circuitée par l'interrupteur I1, la tension sur la ligne commune d'alimentation Vr devenant alors égale à V1.

Chacun des dispositifs de protection L1, L2,..Lp comporte une entrée 34 et une sortie 36, la sortie 36 étant connectée à une entrée d'alimentation 38 des consommateurs C1, C2,..Cp. Une capacité Ca1, Ca2,... Cap est connectée entre la sortie 36 de chacun des dispositifs de protection et un potentiel de référence Vm qui peut être par exemple une masse du dispositif d'alimentation 30. La réserve d'énergie connectée sur la ligne commune 12, du dispositif d'alimentation de l'art antérieur de la figure 1, est déplacée et répartie au niveau des sorties 36 de chacun des dispositifs de protection. La capacité totale de la réserve d'énergie de la figure 1 est répartie au prorata du nombre de lignes Ig1, Ig2,..Igp d'alimentation des consommateurs. Par exemple, la batterie 16 du dispositif de l'art antérieur présentait une valeur de 0,47 Farads. Pour 20 lignes d'alimentation (p=20) chacune des capacités Ca1, Ca2,...Can aura la valeur de 23500 microFarads soit cinq condensateurs de 4700 microFarads en parallèle.

Le déplacement des condensateurs, répartis au niveau des lignes, en sortie 36 des dispositifs de protection, comporte l'avantage d'éviter une propagation de panne à l'ensemble du dispositif d'alimentation par un court-circuit d'un des condensateurs. En effet, un condensateur (ou bloc de condensateurs) Ca1, Ca2,... Cap en court-circuit se trouvera automatiquement isole de la ligne commune 12 d'alimentation par la disjonction de son correspondant dispositif de protection. Une seule ligne d'alimentation sera perdue dans ce cas.

Un autre avantage de la répartition des condensateurs de la réserve d'énergie, réside dans le fait que, lors des mises sous tension des consommateurs, le contrôle et la charge des condensateurs Ca1, Ca2, ..Cap est réalisé par l'ensemble des limiteurs disjoncteurs L1, L2...Lp. Cette fonction énergétique est répartie sur un grand nombre de dispositifs de protection.

Avantageusement une diode de mise en parallèle X1, X2,.. Xp est connectée en parallèle entre l'entrée 34 et la sortie 36 de chacun des dispositifs de protection mettant en parallèle à travers les diodes X1, X2,.. Xp l'ensemble des condensateurs répartis sur les lignes ce qui diminue l'influence de la perte d'un condensateur sur une ligne. En effet, dans le cas de la réserve d'énergie comportant 100 condensateurs répartis sur 20 lignes à raison de cinq condensateurs par ligne, un seul condensateur est perdu parmi 100 condensateurs alors que, sans l'utilisation des diodes de mise en parallèle, il y aurait pour la ligne, une perte de 1 condensateur parmi 5 condensateurs.

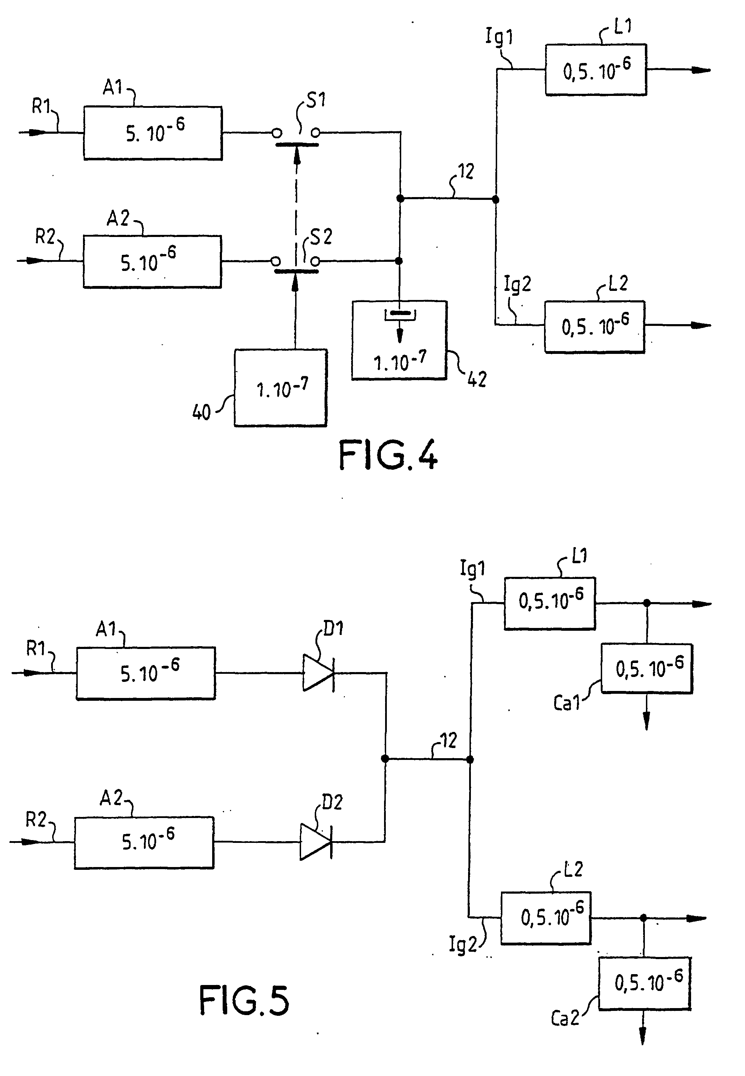

Les figures 4 et 5 montrent des schémas bloc avec les probabilités de panne des sous-ensembles de deux dispositifs d'alimentation permettant d'une façon simplifiée de quantifier l'amélioration obtenue en termes de sécurité et de disponibilité par le dispositif d'alimentation selon l'invention par rapport aux dispositifs de l'art antérieur.

La figure 4 représente le schéma bloc d'un dispositif d'alimentation de l'art antérieur comportant deux réseaux R1, R2 et leurs respectifs adaptateurs A1, A2, un gestionnaire de réseau 40, une réserve d'énergie 42 et deux dispositifs de protection L1 et L2 de deux lignes d'alimentation Ig1 et Ig2 des consommateurs.

La figure 5 représente le schéma bloc d'un dispositif d'alimentation selon l'invention comportant les deux réseaux R1, R2, leurs respectifs adaptateurs A1, A2, et les deux dispositifs de protection L1 et L2 de la figure 4 des deux lignes d'alimentation des consommateurs. Le dispositif de la figure 5 comporte en outre deux capacités Ca1 et Ca2 sur l'une et l'autre ligne d'alimentation des consommateurs. Les chiffres à l'intérieur des blocs représentent la probabilité de panne de chaque fonction.

Les probabilités de perte des différentes fonctions étant les suivantes :

| | |
|---|---|
| Adaptateurs A1, A2 | 5 .10⁻⁶ par heure de vol |
| Gestionnaire 40 | 1 .10⁻⁷ par heure de vol |
| (panne de type commande erratique sur ouverture des deux contacteurs S1 et S2) | |
| Réserve d'énergie 16 | 1 .10⁻⁷ par heure de vol |
| Dispositif de protection L1, L2 | 0,5 .10⁻⁶ par heure de vol |
| (panne de type circuit ouvert ou court-circuit) | |
| Capacités Ca1, Ca2 | 0,5 .10⁻⁶ par heure de vol |
| (panne de type court-circuit) | |

L'événement redouté est la perte de l'ensemble des lignes d'alimentation des consommateurs.

Dans le cas du dispositif d'alimentation de l'art antérieur de la figure 4 la probabilité d'un tel événement est d'environ
: 1 .10 ⁻⁷ par heure de vol ou
: 1 .10 ⁻⁶ pour 10 heures de vol

Dans le cas du dispositif d'alimentation selon l'invention de la figure 5, la probabilité d'un tel événement est :
- la perte des adaptateurs A1 et A2 soit :
   1 .10⁻¹¹ par heure de vol ;
   1 .10⁻¹⁰ pour 10 heures de vol ; ou :
- la panne de type court-circuit des dispositifs de protection L1 et L2 ou des capacités Ca1 et Ca2 soit une probabilité de :
   1 .10 ⁻¹² par heure de vol
   1 .10⁻¹¹ pour 10 heures de vol

En résumé le dispositif d'alimentation selon l'invention supprime les inconvénients des dispositifs d'alimentation de l'art antérieur, à savoir :
- panne commune due au gestionnaire de réseau (14, 40) : ce gestionnaire étant supprimé dans le dispositif d'alimentation selon l'invention tout en conservant la fonction de sélection ;
- pertes d'énergie ;
- panne commune due aux condensateurs : la structure selon l'invention limite la panne due au court-circuit d'un condensateur à la perte d'une seule ligne ;
- mise sous tension et charge des condensateurs : la structure du dispositif selon l'invention répartit cette fonction sur l'ensemble des limiteurs disjoncteurs.

## Revendications

1. Dispositif d'alimentation en énergie électrique, notamment pour être embarqué dans un aérodyne, alimentant en courant continu des consommateurs électriques (C1, C2,...Cp) à partir d'au moins un réseau électrique (Rx) choisi par un circuit sélecteur (14, 32, 40) du dispositif, parmi une pluralité de réseaux électriques (R1, R2,...Rn), le dispositif d'alimentation comportant un adaptateur (A1, A2,....An) par réseau électrique (R1, R2, ... Rn), chacun des adaptateurs fournissant, à partir du réseau électrique auquel l'adaptateur se trouve connecté, une respective tension continue régulée (V1, V2,...Vn) d'alimentation des consommateurs électriques, le circuit sélecteur étant un aiguillage à diodes (32) comportant des diodes (D1, D2,...Dn) dont les cathodes sont connectées ensembles à un point commun d'alimentation (12) des consommateurs et dont les anodes sont respectivement connectées aux réseaux électriques (R1, R2,.... Rn) à travers ses respectifs adaptateurs (A1, A2,...An) pour choisir le réseau électrique connecté à l'adaptateur fournissant la tension continue régulée (Vₓ) la plus élevée, **caracterisé en ce que** chacune des diodes (D1, D2,...Dn) de l'aiguillage comporte un interrupteur (I1, 12, ...In) en parallèle pour court-circuiter sa respective diode lorsqu'elle est traversée par au moins une partie du courant d'alimentation des consommateurs fournie par le réseau électrique choisi (Rx) alimentant les consommateurs électriques.

2. Dispositif d'alimentation en énergie électrique selon la revendication 1, **caractérisé en ce que** les adaptateurs (A1, A2,.. An) comportent chacun un réglage (g1, g2.. gn) permettant d'ajuster leur niveau de tension continue de sortie à des niveaux prédéfinis (V1, V2,... Vn) déterminant des niveaux de priorités P1, P2,... Pn des réseaux électriques.

3. Dispositif d'alimentation en énergie électrique selon l'une des revendications 1 ou 2, **caractérisé en ce qu'**un dispositif écrêteur (Z1, Z2,..Zn) est connecté respectivement à chacune des sorties en courant continu des adaptateurs (A1, A2,...An), éliminant tout panne provoquée par des éventuelles surtensions en sortie des dits adaptateurs.

4. Dispositif d'alimentation selon l'une des revendications 1 à 3 **caractérisé en ce que** chacun des consommateurs est alimenté à travers un dispositif de protection (L1, L2,... Lp) contre les surcharges par déconnexion du consommateur de son alimentation, un condensateur de réserve d'énergie (Ca1, Ca2,...Cap) étant connectée entre la sortie (36) de chacun des dispositifs de protection et un potentiel de référence (Vm) dudit dispositif et **en ce qu'**une diode de mise en parallèle (X1, X2,...Xp) des condensateurs de réserve d'énergie est connectée entre l'entrée (34) et la sortie (36) de chacun des dispositifs de protection, l'anode de la diode de mise en parallèle se trouvant connectée du coté alimentation du consommateur.

5. Dispositif d'alimentation selon la revendication 4, **caractérisé en ce que** le potentiel de référence (Vm) est une masse du dispositif d'alimentation (30).

6. Dispositif d'alimentation selon l'une des revendications 1 à 5, **caractérisé en ce que** les interrupteurs (I1, I2,.. In) sont commandés par un circuit de contrôle (33, Cm) utilisant la mesure des tensions anode/cathode (uac1, uac2,.. uacn) de chacune des diodes (D1, D2,..Dn) de l'aiguillage à diodes (32), le circuit de contrôle fermant, au moment de la mise sous tension du dispositif d'alimentation, l'interrupteur de la diode traversée par le courant fourni par le réseau prioritaire.

## Claims

1. Electrical energy supply device, in particular for carriage on board an aerodyne, supplying DC current to electrical consumers (C1, C2,...Cp) from at least one electrical network (Rx) chosen by a selector circuit (14, 32, 40) of the device, from a plurality of electrical networks (R1, R2,...Rn), the supply device comprising an adapter (A1, A2,....An) per electrical network (R1, R2, ...Rn), each of the adapters providing, from the electrical network to which the adapter is connected, a respective regulated DC voltage (V1, V2,...Vn) for supplying the electrical consumers, the selector circuit being a switchpoint with diodes (32) comprising diodes (D1, D2,...Dn) whose cathodes are together connected to a common supply point (12) of the consumers and whose anodes are respectively connected to the electrical networks (R1, R2,....Rn) through its respective adapters (A1, A2,...An) to choose the electrical network connected to the adapter providing the highest regulated DC voltage (Vx), **characterized in that** each of the diodes (D1, D2,...Dn) of the switchpoint comprises a make/break switch (I1, I2, ...In) in parallel so as to short-circuit its respective diode when the latter is traversed by at least a part of the current supplying the consumers, which part is provided by the chosen electrical network (Rx) supplying the electrical consumers.

2. Electrical energy supply device according to Claim 1, **characterized in that** the adapters (A1, A2,.. An) each comprise a setting (g1, g2.. gn) making it possible to adjust their output DC voltage level to predefined levels (V1, V2,...Vn) determining levels of priorities P1, P2,...Pn of the electrical networks.

3. Electrical energy supply device according to one of Claims 1 or 2, **characterized in that** a peak-limiter device (Z1, Z2,..Zn) is connected respectively to each of the DC current outputs of the adapters (A1, A2,...An), eliminating any failure caused by possible overvoltages at the output of said adapters.

4. Supply device according to one of Claims 1 to 3, **characterized in that** each of the consumers is supplied through a protection device (L1, L2,...Lp) for protecting against overloads by disconnecting the consumer from its supply, an energy reserve capacitor (Ca1, Ca2,...Cap) being connected between the output (36) of each of the protection devices and a reference potential (Vm) of said device and **in that** a diode (X1, X2,...Xp) for paralleling the energy reserve capacitors is connected between the input (34) and the output (36) of each of the protection devices, the anode of the paralleling diode being connected on the consumer supply side.

5. Supply device according to Claim 4, **characterized in that** the reference potential (Vm) is a ground of the supply device (30).

6. Supply device according to one of Claims 1 to 5, **characterized in that** the make/break switches (I1, I2,.. In) are controlled by a command circuit (33, Cm) using the measurement of the anode/cathode voltages (uac1, uac2,.. uacn) of each of the diodes (D1, D2,..Dn) of the diode switchpoint (32), the command circuit, upon the powering-up of the supply device, closing the make/break switch of the diode traversed by the current provided by the priority network.

## Patentansprüche

1. Vorrichtung zur Versorgung mit elektrischer Energie, die insbesondere in einem Luftfahrzeug untergebracht werden soll und elektrische Verbraucher (C1, C2,...Cp) mit Gleichstrom aus zumindest einem elektrischen Netz (Rx), das durch eine Selektorschaltung (14, 32, 40) der Vorrichtung aus einer Mehrzahl von elektrischen Netzen (R1, R2,...Rn) ausgewählt wird, wobei die Versorgungsvorrichtung einen Adapter (A1, A2,...An) je elektrischem Netz (R1, R2,... Rn) umfasst, wobei jeder der Adapter aus dem elektrischen Netz, an das der Adapter angeschlossen ist, eine jeweilige geregelte Gleichspannung (V1, V2,...Vn) zur Versorgung von elektrischen Verbrauchern liefert, wobei die Selektorschaltung eine Diodenweiche (32) ist, die Dioden (D1, D2,...Dn) umfasst, deren Kathoden zusammen an einen gemeinsamen Versorgungspunkt (12) der Verbraucher angeschlossen sind und deren Anoden jeweils an die elektrischen Netze (R1, R2,... Rn) über ihre jeweiligen Adapter (A1, A2,...An) angeschlossen sind, um das an den Adapter angeschlossene elektrische Netz auszuwählen, das die höchste geregelte Gleichspannung (Vx) liefert, **dadurch gekennzeichnet, dass** jede der Dioden (D1, D2, ... Dn) der Weiche einen parallel geschalteten Schalter (I1, I2, ... In) umfasst, um seine jeweilige Diode kurzzuschließen, wenn sie durch zumindest einen Teil des Versorgungsstroms der Verbraucher durchquert wird, der durch das ausgewählte Netz (Rx) geliefert wird, das die elektrischen Verbraucher versorgt.

2. Vorrichtung zur Versorgung mit elektrischer Energie nach Anspruch 1, **dadurch gekennzeichnet, dass** die Adapter (A1, A2,...An) jeweils eine Regelung (g1, g2.. gn) umfassen, die es gestattet ihren Ausgangsgleichspannungspegel auf vorbestimmte Pegel (V1, V2,...Vn) einzustellen, die die Prioritätsniveaus P1, P2,...Pn der elektrischen Netze bestimmen.

3. Vorrichtung zur Versorgung mit elektrischer Energie nach Anspruch 1 oder 2, **dadurch gekennzeichnet, dass** eine Amplitudenbegrenzungsschaltung (Z1, Z2,...Zn) jeweils mit jedem der Gleichstromausgänge der Adapter (A1, A2,...An) verbunden ist und jede Störung eliminieren, die durch eventuelle Überspannungen am Ausgang der Adapter hervorgerufen wird.

4. Versorgungsvorrichtung nach einem der Ansprüche 1 bis 3, **dadurch gekennzeichnet, dass** jeder der Verbraucher über eine Schutzvorrichtung (L1, L2,...Lp) gegen die Überlasten durch Abkopplung des Verbrauchers von seiner Versorgung versorgt wird, wobei ein Energiereservekondensator (Cal, Ca2,...Cap) zwischen dem Ausgang (36) jeder dieser Schutzvorrichtungen und einem Referenzpotential (Vm) der Vorrichtung angeschlossen ist und dass eine Parallelschaltungsdiode (X1, X2,...Xp) der Energiereservekondensatoren zwischen dem Eingang (34) und dem Ausgang (36) von jeder der Schutzvorrichtungen angeschlossen ist, wobei die Anode der Parallelschaltungsdiode auf der Versorgungsseite des Verbrauchers angeschlossen ist.

5. Versorgungsvorrichtung nach Anspruch 4, **dadurch gekennzeichnet, dass** das Referenzpotential (Vm) ein Massepotential der Versorgungsvorrichtung (30) ist.

6. Versorgungsvorrichtung nach einem der Ansprüche 1 bis 5, **dadurch gekennzeichnet, dass** die Schalter (I1, I2,...In) durch eine Steuerschaltung (33, Cm) gesteuert wird, die die Messung der Spannungen Anode/Kathode (uacl, uac2,.. uacn) jeder der Dioden (D1, D2,...Dn) der Diodenweiche (32) verwendet, wobei die Steuervorrichtung im Moment der Unterspannungsetzung der Versorgungsvorrichtung den Schalter der Diode schließt, die durch den von dem Prioritätsnetz gelieferten Strom durchquert wird.
